# EUROPEAN PATENT APPLICATION

(11) **EP 2 902 220 A1**
(43) Date of publication of application: **05.08.2015**
(21) Application number: 14193265.7
(22) Date of filing: 14.11.2014
(51) Int. Cl.: B60G 3/20, B60G 7/00, B60G 11/16, B60G 11/28, B60G 13/00, B60G 15/07

(54) **Compact rear suspension damper-spring assembly**

(30) Priority: 04.02.2014 US 201414172147; 11.02.2014 US 201414177412; 13.10.2014 US 201414512486; 13.10.2014 US 201414512511
(71) Applicant: Atieva, Inc., Redwood, City CA 94065 (US)
(72) Inventor: Rawlinson, Peter Dore, Evesham, Worcestershire WR11 8SL (GB)
(74) Representative: Prüfer & Partner GbR European Patent Attorneys

(57) **Abstract**

A vehicle wheel suspension system that achieves increased width in the passenger and/or luggage compartment is provided. The suspension system utilizes a (i) a wheel support member that is positioned between the inner and outer tire planes; (ii) a nonlinearly-shaped damper-spring support member that is attached to the wheel support member, either directly or via a linkage arm; (iii) a damper-spring mounting platform coupled, either rigidly or via a rotatable connection, to the nonlinearly-shaped damper-spring support member and which is positioned above, and at least partially overlaps, the tire; and (iv) a damper-spring assembly mounted to the damper-spring mounting platform and coupled to a vehicle body structure.

## Description

### FIELD OF THE INVENTION

The present invention relates generally to automobiles and, more particularly, to a rear suspension damper-spring assembly.

### BACKGROUND OF THE INVENTION

When configuring a vehicle's suspension, the primary considerations for the automobile designer are the design goals set for passenger ride comfort and overall vehicle performance. In general the designer first selects the type of suspension required by the style of vehicle, i.e., high performance car, luxury sedan, compact economy car, SUV, etc., and then configures and adjusts the selected type of suspension to meet the specific design goals set for the vehicle.

Various suspension types exist, each of which provides specific driving characteristics. One common characteristic of each type of suspension, however, is the in-board mounting of the damper and spring assembly regardless of whether or not the damper and spring are coaxially mounted. This in-board mounting scheme is illustrated in the torsion beam rear wheel suspension system disclosed in U.S. Patent No. 7,946,600. In this system one end of each arm of a pair of trailing arms is pivotally supported by the vehicle body via a rubber bush joint. The other end of each trailing arm extends outward and rearward and supports the corresponding rear wheel via a hub bearing unit. At intermediate locations, the two trailing arms are connected to, and separated by, a torsion beam. Located between the torsion beam coupling and the hub bearing unit of each trailing arm is a spring seat, thus providing means for resiliently supporting the trailing arm with a coil spring interposed between the spring seat and the vehicle body. A damper, located behind the coil spring, extends between the corresponding trailing arm and the vehicle body. A similar suspension configuration is disclosed for use with an in-wheel motor in U.S. Patent No. 8,220,808.

A different type of suspension, typically referred to as a multi-link suspension, is disclosed in U.S. Patent No. 6,938,908. In the disclosed suspension assembly each wheel support is connected to the vehicle body using five links. A coaxially arranged damper-coil spring assembly is interposed between the vehicle body and an inward projection of the wheel support. When viewed from the side, the damper-coil spring assembly extends in a substantially vertical direction while the assembly, when viewed from the rear, angles slightly inward towards the vehicle's centerline. A similar suspension configuration is disclosed in U.S. Patent No. 5,507,510.

Yet another type of suspension, commonly referred to as a double wishbone suspension, is disclosed in U.S. Patent No. 6,945,541. In this type of suspension the wheel mount is coupled to upper and lower control arms via ball joints, where each substantially horizontal control arm is approximately parallel to the road surface. A coaxial damper-spring assembly is interposed between the wheel mount and the vehicle body and positioned such that it is substantially vertical when viewed from the side, and angled inwards towards the vehicle's centerline when viewed from the rear.

Regardless of the type of suspension, in general the damper-spring assembly angles inwardly towards the vehicle's centerline when viewed from the rear of the car. The degree to which the assembly intrudes upon either the passenger compartment or the luggage compartment depends both on the angle of the assembly and the mounting location of the assembly relative to the wheel mount. The configuration of the assembly, for example whether or not the damper and spring are coaxially mounted and where the spring is mounted relative to the damper and wheel mount, also impacts the degree of interior space intrusion. Accordingly, what is needed is a damper-spring assembly that minimizes interior space intrusion while still achieving the desired level of ride comfort and vehicle performance. The present invention provides such a damper-spring assembly.

### SUMMARY OF THE INVENTION

The present invention provides a vehicle wheel suspension system that achieves increased width in the passenger and/or luggage compartment while still providing optimal ride characteristics. In one configuration, the wheel suspension system is comprised of (i) a wheel support member that is positioned between the inner and outer tire planes, and preferably in-board of the tire centerline, and that is configured to support a wheel-carrying spindle and that includes a plurality of mounts configured to accept a plurality of rotatably connected linkage arms; (ii) a nonlinearly-shaped damper-spring support member, where the first end of the support member, which may be comprised of a bushing collar, is rotatably connected to the wheel support member and is located between the inner and outer tire planes; (iii) a damper-spring mounting platform, where the second end of the nonlinearly-shaped damper-spring support member is coupled, either rigidly or via a rotatable connection, to the damper-spring mounting platform, and where the nonlinearly-shaped damper-spring support member positions the damper-spring mounting platform above and at least partially overlapping a tire coupled to the wheel-carrying spindle; and (iv) a damper-spring assembly comprised of a damper and a spring, where the damper-spring assembly is mounted to the damper-spring mounting platform and is coupled to a vehicle body structure. The damper and spring comprising the damper-spring assembly are preferably coaxially mounted and may be configured such that a first bushing collar corresponding to the first end of the nonlinearly-shaped damper-spring support member and a second bushing collar corresponding to the second end of the nonlinearly-shaped damper-spring support member are each positioned on the damper-spring assembly axis. Preferably the suspension system is configured such that the load path directed along the axis corresponding to the coaxially mounted damper-spring assembly intersects the underlying road surface at the approximate center of the tire contact patch. The spring of the damper-spring assembly may rest on the damper-spring mounting platform, and preferably be captured between the damper-spring mounting platform and a spring retaining member, while the damper rod may pass through the spring and be coupled, e.g., bolted, to the damper-spring mounting platform. The spring and damper of the damper-spring assembly may be independently mounted to the vehicle body structure. The damper-spring assembly may be configured such that the damper is misaligned and offset relative to the spring. The spring of the damper-spring assembly may be comprised of an air spring or a coil spring.

In another configuration, the wheel suspension system is comprised of (i) a wheel support member that is positioned between the inner and outer tire planes, and preferably in-board of the tire centerline, and that is configured to support a wheel-carrying spindle and that includes a plurality of mounts; (ii) a plurality of rotatably connected linkage arms coupled to the plurality of mounts of the wheel support member; (iii) a nonlinearly-shaped damper-spring support member, where the first end of the support member, which may be comprised of a bushing collar, is rotatably connected to a first link, either an upper linkage arm or a lower linkage arm, of the plurality of rotatably connected linkage arms; (iv) a damper-spring mounting platform, where the second end of the nonlinearly-shaped damper-spring support member is coupled, either rigidly or via a rotatable connection, to the damper-spring mounting platform, and where the nonlinearly-shaped damper-spring support member positions the damper-spring mounting platform above and at least partially overlapping a tire coupled to the wheel-carrying spindle; and (v) a damper-spring assembly comprised of a damper and a spring, where the damper-spring assembly is mounted to the damper-spring mounting platform and is coupled to a vehicle body structure. The damper and spring comprising the damper-spring assembly are preferably coaxially mounted and may be configured such that a first bushing collar corresponding to the first end of the nonlinearly-shaped damper-spring support member and a second bushing collar corresponding to the second end of the nonlinearly-shaped damper-spring support member are each positioned on the damper-spring assembly axis. Preferably the suspension system is configured such that the load path directed along the axis corresponding to the coaxially mounted damper-spring assembly intersects the underlying road surface at the approximate center of the tire contact patch. The spring of the damper-spring assembly may rest on the damper-spring mounting platform, and preferably be captured between the damper-spring mounting platform and a spring retaining member, while the damper rod may pass through the spring and be coupled, e.g., bolted, to the damper-spring mounting platform. The spring and damper of the damper-spring assembly may be independently mounted to the vehicle body structure. The damper-spring assembly may be configured such that the damper is misaligned and offset relative to the spring. The spring of the damper-spring assembly may be comprised of an air spring or a coil spring.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a perspective view of a damper-spring assembly in accordance with the invention;
Fig. 2 provides a similar view of the damper-spring assembly shown in Fig. 1 with the addition of a tire, thereby illustrating the position of the damper-spring assembly relative to the tire;
Fig. 3 provides a front view of the embodiment illustrated in Figs. 1 and 2 in which the damper-spring mounting platform is rigidly coupled to the damper-spring support member;
Fig. 4 provides a detailed perspective view of the wheel support member illustrated in Figs. 1-3;
Fig. 5 provides a front view of the embodiment illustrated in Figs. 1 and 2 in which the damper-spring mounting platform is rotatably connected to the damper-spring support member;
Fig. 6 provides a detailed perspective view of the damper-spring support member;
Fig. 7 provides a side view of an alternate damper-spring support member comprised of a continuously-curved element interposed between the rotational coupling and the spring platform;
Fig. 8 provides a side view of the damper-spring support member shown in Fig. 7, modified to include a rotational coupling between the mounting platform and the support member;
Fig. 9 provides a side view of an alternate damper-spring support member comprised of a series of straight elements interposed between the rotational coupling and the spring platform;
Fig. 10 provides a side view of the damper-spring support member shown in Fig. 9, modified to include a rotational coupling between the mounting platform and the support member;
Fig. 11 illustrates a preferred alignment for the damper-spring assembly of the invention relative to the tire and road surface;
Fig. 12 illustrates a preferred alignment for the damper-spring assembly in which the damper-spring mounting platform is rotatably connected to the damper-spring support member;
Fig. 13 provides a perspective view of the damper-spring assembly of the invention coupled to an upper linkage arm;
Fig. 14 provides a perspective view of the damper-spring assembly of the invention coupled to a lower linkage arm;
Fig. 15 provides a front view of the damper-spring assembly shown in Fig. 13 in which the nonlinearly-shaped damper-spring support member is rigidly coupled to the damper-spring mounting platform;
Fig. 16 provides a front view of the damper-spring assembly shown in Fig. 13 in which the nonlinearly-shaped damper-spring support member is rotatably coupled to the damper-spring mounting platform;
Fig. 17 provides a front view of the damper-spring assembly shown in Fig. 14 in which the nonlinearly-shaped damper-spring support member is rigidly coupled to the damper-spring mounting platform;
Fig. 18 provides a front view of the damper-spring assembly shown in Fig. 14 in which the nonlinearly-shaped damper-spring support member is rotatably coupled to the damper-spring mounting platform;
Fig. 19 provides a detailed perspective view of the linkage assembly of Figs. 13, 15 and 16, with the inclusion of the nonlinearly-shaped damper-spring support member;
Fig. 20 provides a detailed perspective view of the linkage assembly of Figs. 13, 15 and 16, without the inclusion of the nonlinearly-shaped damper-spring support member;
Fig. 21 provides a side view of an alternate damper-spring support member for use with the embodiment illustrated in Figs. 13, 15 and 16, where the support member is comprised of a continuously-curved element interposed between the rotational coupling and the spring platform;
Fig. 22 provides a side view of the damper-spring support member shown in Fig. 21, modified to include a rotational coupling between the mounting platform and the support member;
Fig. 23 provides a side view of an alternate damper-spring support member for use with the embodiment illustrated in Figs. 13, 15 and 16, where the support member is comprised of a series of straight elements interposed between the rotational coupling and the spring platform;
Fig. 24 provides a side view of the damper-spring support member shown in Fig. 23, modified to include a rotational coupling between the mounting platform and the support member;
Fig. 25 provides a detailed perspective view of the linkage assembly of Figs. 14, 17 and 18, with the inclusion of the nonlinearly-shaped damper-spring support member;
Fig. 26 provides a detailed perspective view of the linkage assembly of Figs. 14, 17 and 18, without the inclusion of the nonlinearly-shaped damper-spring support member;
Fig. 27 provides a side view of an alternate damper-spring support member for use with the embodiment illustrated in Figs. 14, 17 and 18, where the support member is comprised of a continuously-curved element interposed between the rotational coupling and the spring platform;
Fig. 28 provides a side view of the damper-spring support member shown in Fig. 27, modified to include the rotational coupling between the mounting platform and the support member;
Fig. 29 provides a side view of an alternate damper-spring support member for use with the embodiment illustrated in Figs. 14, 17 and 18, where the support member is comprised of a series of straight elements interposed between the rotational coupling and the spring platform;
Fig. 30 provides a side view of the damper-spring support member shown in Fig. 29, modified to include the rotational coupling between the mounting platform and the support member;
Fig. 31 schematically illustrates the primary components associated with the damper-spring assembly;
Fig. 32 schematically illustrates an alternate vehicle mounting configuration; and
Fig. 33 illustrates a configuration in which the damper and spring are misaligned and offset from one another.

### DESCRIPTION OF THE SPECIFIC EMBODIMENTS

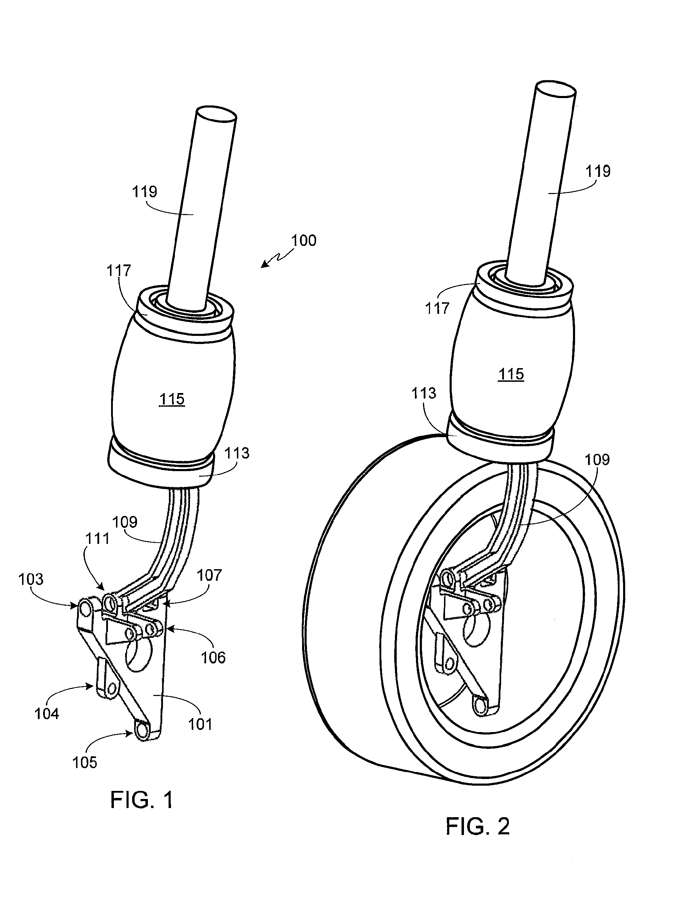

Figs. 1-3 illustrate a vehicle suspension assembly 100 in accordance with a preferred embodiment of the invention. Although assembly 100 may be utilized in any of a variety of different vehicle suspension types, both front and rear, preferably it is used in a multi-link rear suspension configured to achieve superior ride characteristics while providing increased width in the passenger and/or luggage compartment.

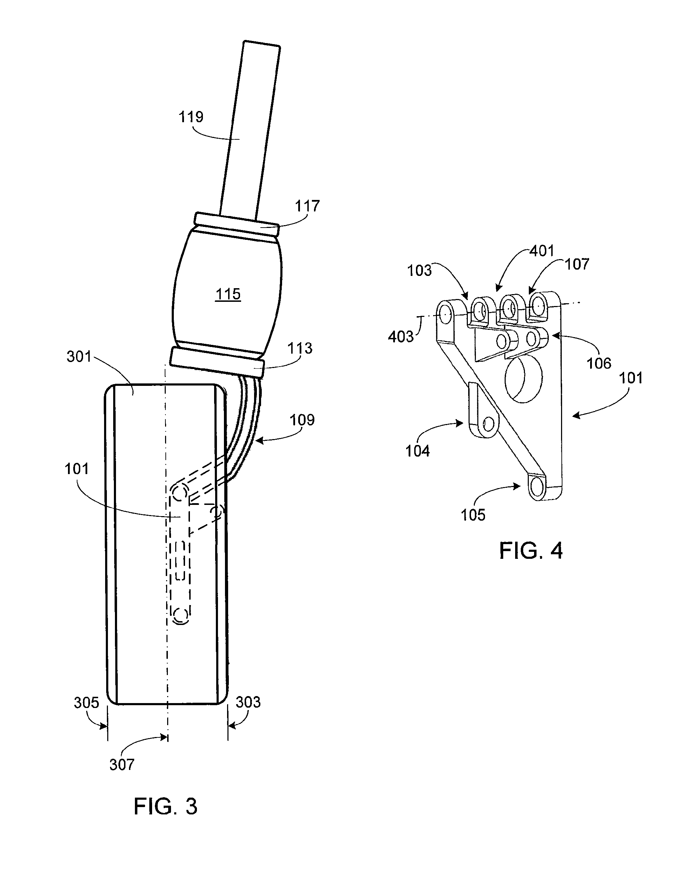

Figs. 1 and 2 provide a perspective view of damper-spring assembly 100, Fig. 2 including a tire in order to illustrate the location of the assembly relative to the tire. Fig. 3 provides a front view of damper-spring assembly 100. Disposed at the end of assembly 100 is a wheel support member 101. Wheel support member 101 is configured to support a wheel-carrying spindle, not shown, and provides multiple mounts for coupling multiple independent linkage arms, i.e., links, that couple the wheel support member to the vehicle body. For clarity, the links, wheel-carrying spindle, wheel and tire are not shown in Fig. 1, although the tire is shown in Figs. 2 and 3 in order to illustrate the location of the damper-spring assembly 100 relative to the tire.

In the illustrated embodiment, member 101 provides five linkage mounts 103-107, each of which allows a corresponding linkage arm to be rotatably coupled to the wheel support member 101. Note that after assembly and as illustrated in Fig. 3, wheel support member 101 is located between inner tire plane 303 and outer tire plane 305 of tire 301, and preferably in-board of tire centerline 307, i.e., relative to tire centerline 307 member 101 is located closer to inner tire plane 303 and the vehicle's centerline rather than closer to outer tire plane 305 and the outer envelope of the vehicle. Fig. 4 provides a detailed perspective view of wheel support member 101.

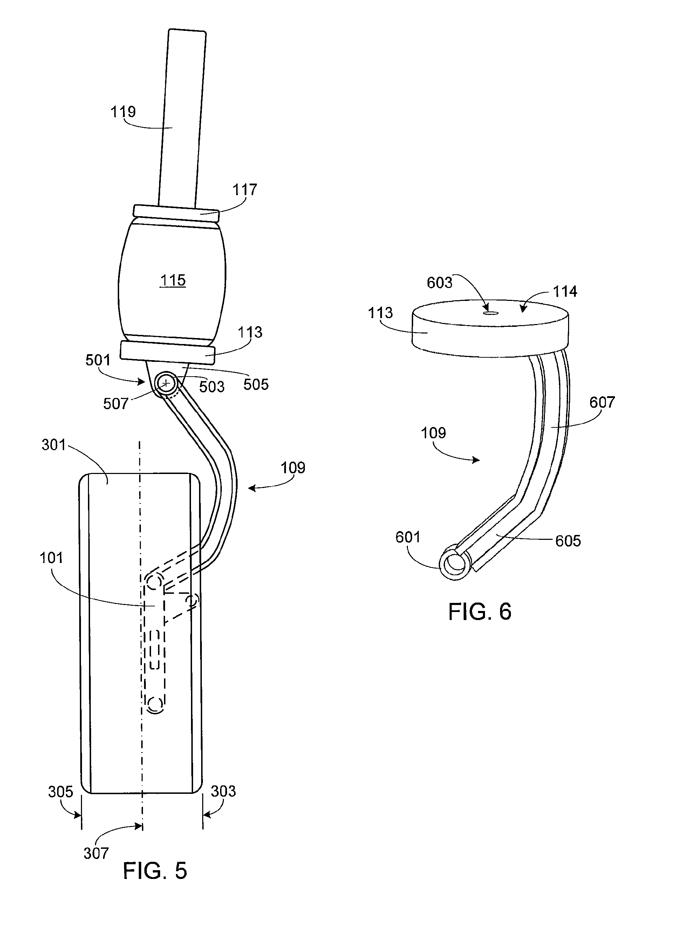

Coupled to wheel support member 101 is a nonlinearly-shaped damper-spring support member 109. The lower end of member 109 is rotatably connected to wheel support member 101 via a rotational connection generally designated 111, where rotational connection 111 is preferably located between inner tire plane 303 and outer tire plane 305 as illustrated. Although a variety of rotational connections 111 are contemplated that would allow member 109 to pivot about wheel support member 101, as shown in Fig. 6 preferably a bushing within collar 601 is captured by a pin or bolt fastener (not visible) within mount 401 of member 101, thus allowing the damper-spring support 109 to rotate about axis 403 of wheel support member 101. In an alternate embodiment, rotational connection 111 is comprised of a ball joint.

In the embodiment illustrated in Fig. 3, the upper end of member 109 is rigidly coupled to a damper-spring mounting platform 113. In an alternate embodiment illustrated in Fig. 5, the upper end of member 109 is rotatably connected to damper-spring mounting platform 113 via a rotational connection generally designated 501. A variety of rotational connections 501 are contemplated that would allow mounting platform 113 and the attached damper-spring assembly to pivot about member 109, although in the preferred and illustrated embodiment a bushing within collar 503 is captured by a pin or bolt fastener (not visible) within mount 505 of mounting platform 113, thus allowing the damper-spring assembly attached to platform 113 to rotate about axis 507 of member 109. In an alternate embodiment, rotational connection 501 is comprised of a ball joint.

In the embodiments illustrated in Figs. 3 and 5, the lower end of spring 115 rests on surface 114 of platform 113, and is captured between mounting platform 113 and a spring retaining member 117. The inventor envisions that spring 115 may consist of either a coil spring or an air spring. The damper rod, not visible in Figs. 1-3 and 5, is coupled to mounting platform 113. Preferably the damper rod is bolted to mounting platform 113 via a threaded hole 603 (see Fig. 6). Preferably damper 119 and spring 115 are coaxially mounted to mounting platform 113.

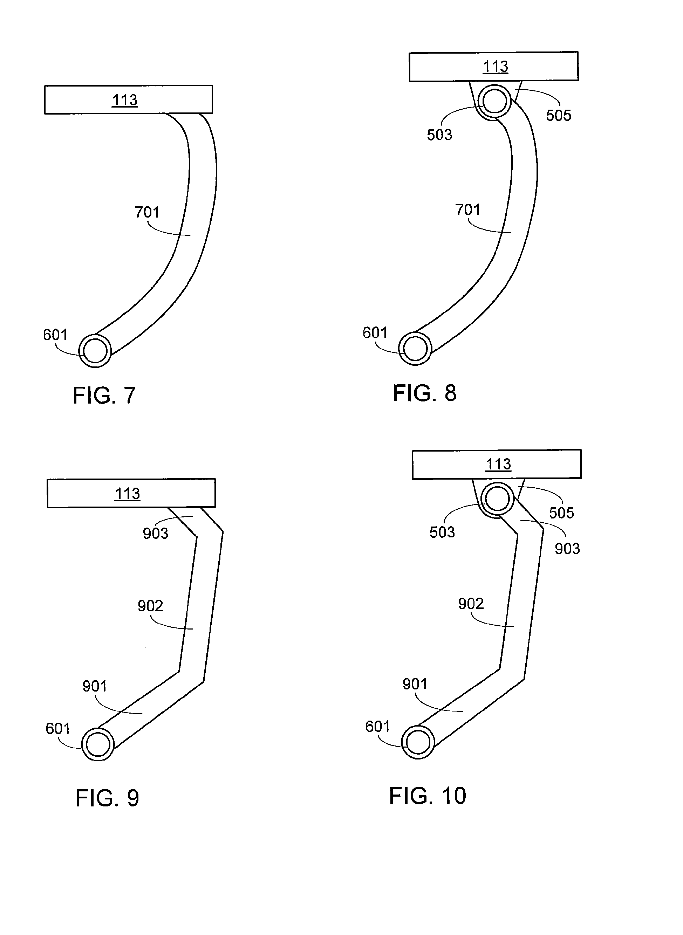

In a preferred embodiment and as shown in Fig. 6, nonlinearly-shaped member 109 is comprised of a straight portion 605 and a curved portion 607. It should be appreciated, however, that the shaped member may utilize other shapes. For example, Figs. 7 and 8 utilize a continuously curved member 701, where the support member in Fig. 7 is rigidly coupled to mounting platform 113 while the support member in Fig. 8 is rotatably coupled to mounting platform 113. The support member illustrated in Figs. 9 and 10 utilize a series of straight sections 901-903, where the support member in Fig. 9 is rigidly coupled to mounting platform 113 while the support member in Fig. 10 is rotatably coupled to mounting platform 113.

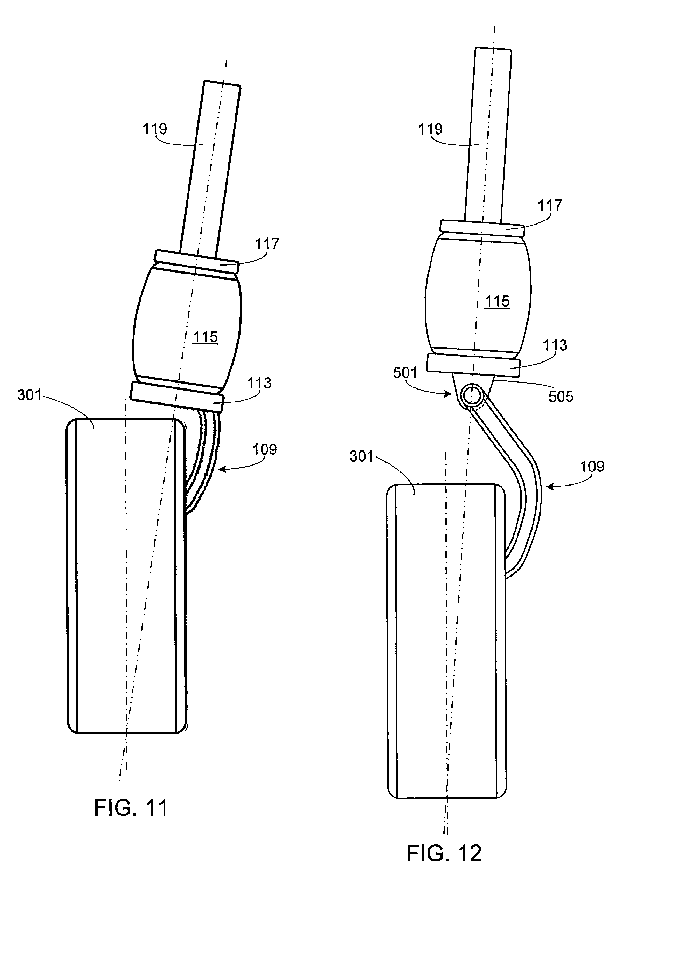

The use of a nonlinearly-shaped member to couple wheel mount 101 to damper 119 and spring 115 allows the damper-spring unit to overlap tire 301 as shown in Figs. 3 and 5, thereby substantially increasing the separation distance between the left vehicle and right vehicle damper-spring units over that achievable using a conventional suspension. This results in increased passenger and/or luggage compartment space in this region of the vehicle. Furthermore in at least one preferred embodiment, the system is configured to direct loads along the damper axis towards the center of the tire's contact patch with the road. This aspect is illustrated in Figs. 11 and 12. In the embodiment illustrated in Fig. 11, preferably collar 601 is positioned on the axis of the damper 119, while in the embodiment illustrated in Fig. 12, preferably both collars 503 and 601 are positioned on the damper's axis. Note that in the embodiment shown in Figs. 5 and 12 in which the damper-spring unit is rotatably connected to support member 109, tire 301 can change camber, for example when the car travels over a bump, without imparting lateral force on the end of the assembly, thereby resulting in smoother damping.

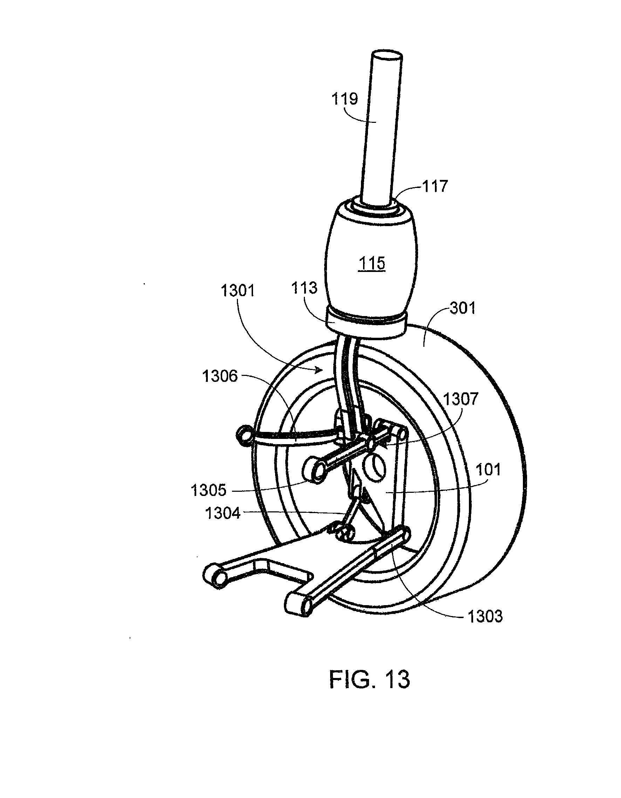

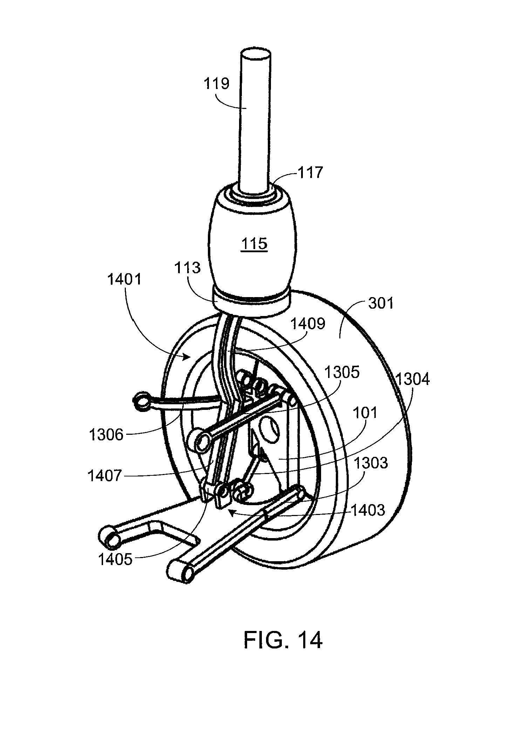

In the embodiments illustrated in Figs. 1-3, 5, 11 and 12, the damper-spring assembly is coupled to wheel support member 101 via damper-spring support member 109. In an alternate embodiment, the nonlinearly-shaped damper-spring support member is coupled to one of the linkage arms, i.e., either to one of the upper linkage arms as illustrated in Fig. 13 or to a lower linkage arm as illustrated in Fig. 14. As in the prior embodiments, wheel support member 101 includes multiple mounts for rotatably coupling the wheel support member to the vehicle body via multiple linkage arms 1303-1306, also referred to herein as links. As in the prior illustrations, the wheel-carrying spindle is not shown although tire 301 is included for clarity.

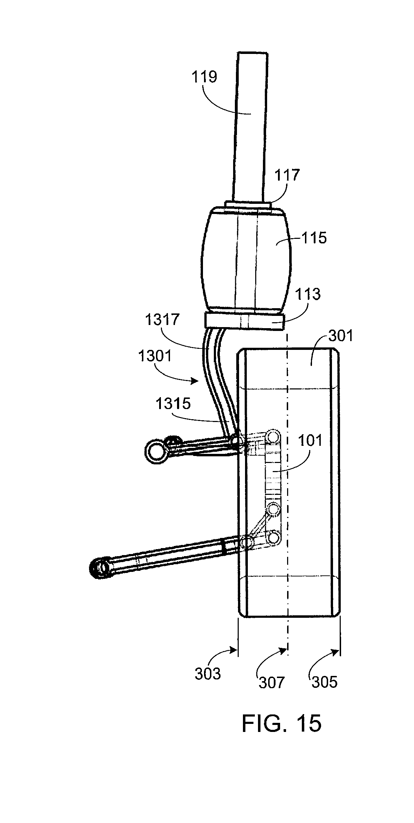

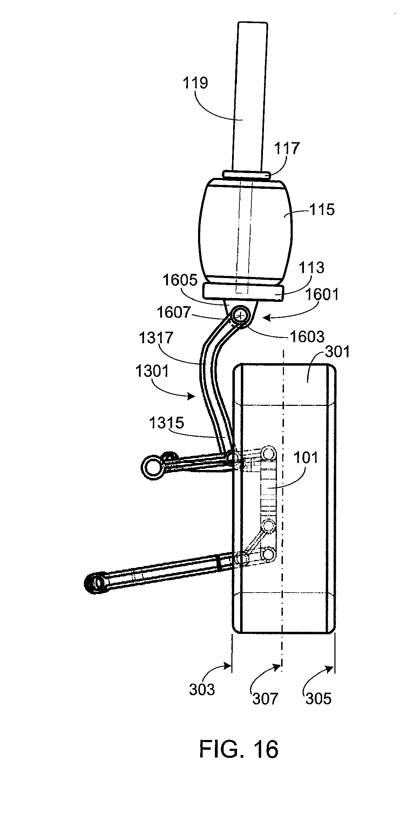

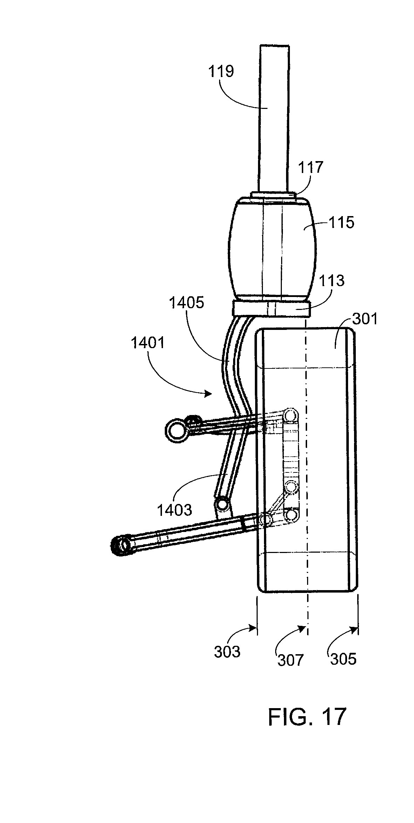

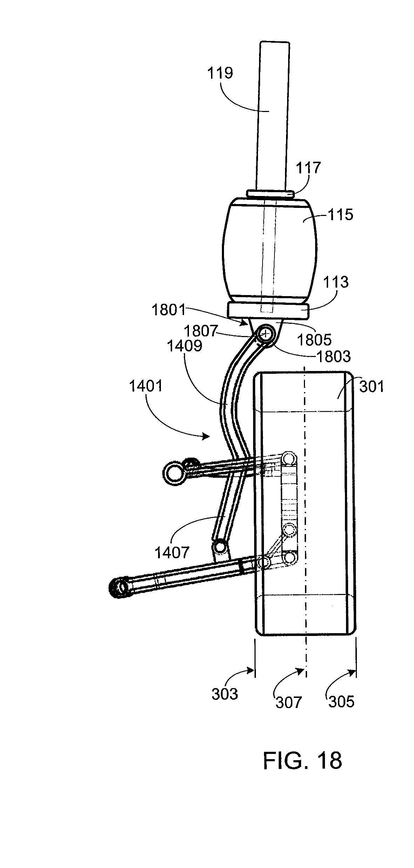

As in the prior embodiments, a nonlinearly-shaped damper-spring support member is used, thus allowing the damper-spring assembly to overlap tire 301. Preferably, and as illustrated in Figs. 15-18, at least 50 percent of the width of mounting platform 113, spring 115 and damper 119 extend past inner tire plane 303 towards tire centerline 307. Locating the damper-spring unit over the tire substantially increases the separation distance between the left vehicle and right vehicle damper-spring units over that achievable utilizing a conventional suspension, thereby providing increased passenger and/or luggage compartment space in this region of the vehicle. Fig. 15 provides a front view of the damper-spring assembly shown in Fig. 13 in which the nonlinearly-shaped damper-spring support member 1301 is rigidly coupled to damper-spring mounting platform 113; Fig. 16 provides a front view of the damper-spring assembly shown in Fig. 13 in which the nonlinearly-shaped damper-spring support member 1301 is rotatably coupled to damper-spring mounting platform 113 via a rotational connection generally designated 1601; Fig. 17 provides a front view of the damper-spring assembly shown in Fig. 14 in which the nonlinearly-shaped damper-spring support member 1401 is rigidly coupled to damper-spring mounting platform 113; and Fig. 18 provides a front view of the damper-spring assembly shown in Fig. 14 in which the nonlinearly-shaped damper-spring support member 1401 is rotatably coupled to damper-spring mounting platform 113 via a rotational connection generally designated 1801.

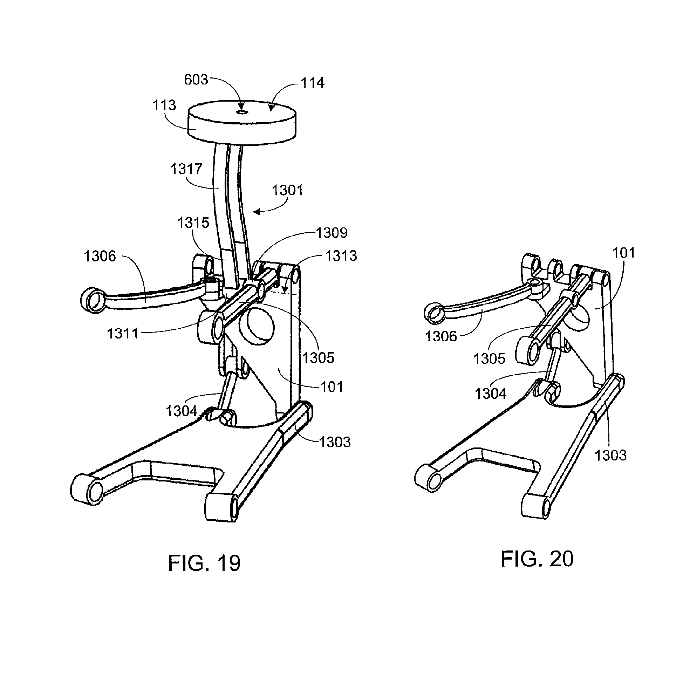

Figs. 19 and 20 provide a detailed perspective view of the linkage assembly shown in Figs. 13, 15 and 16 with and without damper-spring support member 1301, respectively. Coupled to one of the upper linkage arms, and specifically coupled to linkage arm 1305 in the illustrated embodiment, is a nonlinearly-shaped damper-spring support member 1301. The lower end of member 1301 is rotatably connected to upper linkage arm 1305 via a rotational connection generally designated 1307. Although a variety of rotational connections 1307 are contemplated that would allow member 1301 to pivot about the upper linkage, in the preferred and illustrated embodiment a bushing within collar 1309 of linkage arm 1305 and collar 1311 of support member 1301 is captured by a pin or bolt fastener (not visible), thus allowing the damper-spring support 1301 to rotate about axis 1313. In an alternate embodiment, rotational connection 1307 is comprised of a ball joint.

In the embodiment illustrated in Fig. 15, the upper end of member 1301 is rigidly coupled to a damper-spring mounting platform 113. In an alternate embodiment illustrated in Fig. 16, the upper end of member 1301 is rotatably connected to damper-spring mounting platform 113 via a rotational connection generally designated 1601. A variety of rotational connections 1601 are contemplated that would allow mounting platform 113 and the attached damper-spring assembly to pivot about member 1301, although in the preferred and illustrated embodiment a bushing within collar 1603 is captured by a pin or bolt fastener (not visible) within mount 1605 of mounting platform 113, thus allowing the damper-spring assembly attached to platform 113 to rotate about axis 1607 of member 1301. In an alternate embodiment, rotational connection 1601 is comprised of a ball joint.

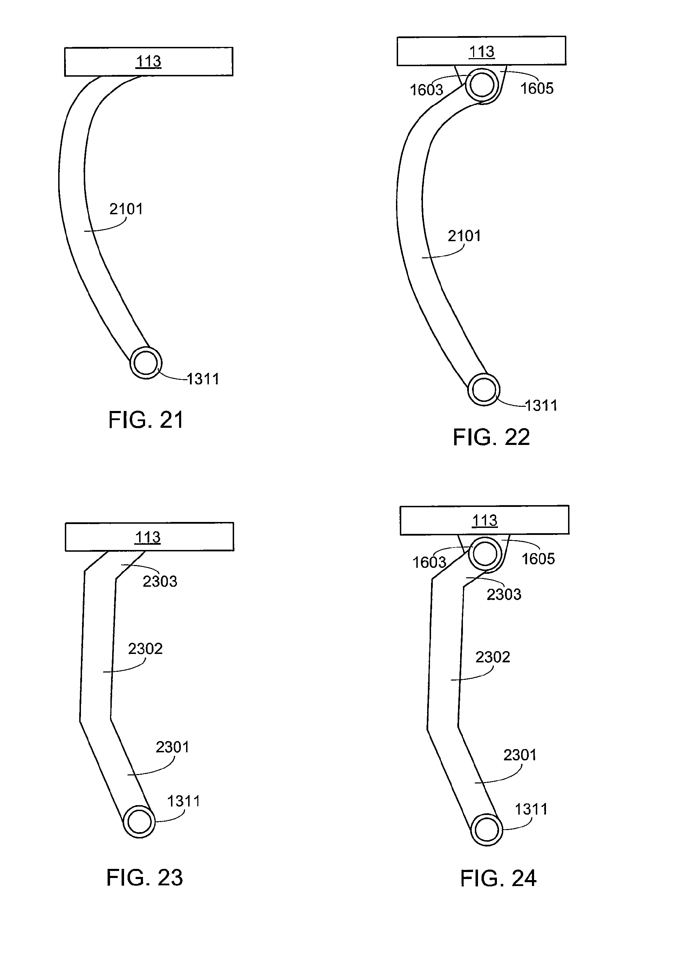

In the embodiment illustrated in Figs. 13, 15 and 16, nonlinearly-shaped member 1301 is comprised of a straight portion 1315 and a curved portion 1317. It should be appreciated, however, that the shaped member may utilize other shapes. For example, Figs. 21 and 22 utilize a continuously curved member 2101, where the support member in Fig. 21 is rigidly coupled to mounting platform 113 while the support member in Fig. 22 is rotatably coupled to mounting platform 113. The support member illustrated in Figs. 23 and 24 utilize a series of straight sections 2301-2303, where the support member in Fig. 23 is rigidly coupled to mounting platform 113 while the support member in Fig. 24 is rotatably coupled to mounting platform 113.

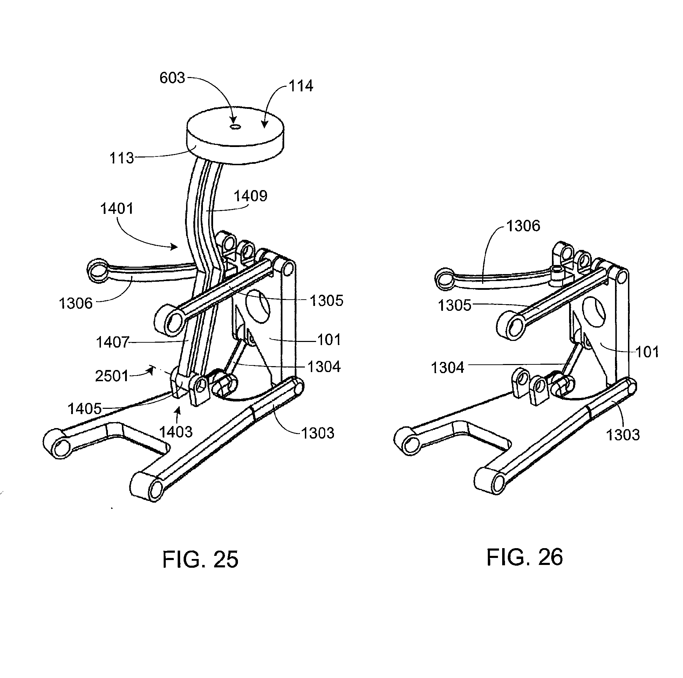

As previously noted, although the damper-spring support member may be coupled to upper linkage arm 1305 as described above, the damper-spring support member may also be connected elsewhere on the multi-link assembly. For example and as illustrated in Figs. 14, 17 and 18, the damper-spring support member 1401 may also be rotatably coupled to a lower linkage arm. In the embodiment illustrated in Figs. 14, 17 and 18, nonlinearly-shaped damper-spring support member 1401 passes between the upper linkage arms 1305 and 1306 and is rotatably connected to lower linkage arm 1303 via a rotational connection generally designated 1403. Figs. 25 and 26 provide a detailed perspective view of the linkage assembly with and without damper-spring support member 1401, respectively. Although a variety of rotational connections 1403 are contemplated that would allow member 1401 to pivot about the lower linkage, in the preferred and illustrated embodiment a bushing within collar 1405 of member 1401 is captured by a pin or bolt fastener (not visible), thus allowing the damper-spring support 1401 to rotate about axis 2501. In an alternate embodiment, rotational connection 1403 is comprised of a ball joint.

In the embodiment illustrated in Fig. 17, the upper end of member 1401 is rigidly coupled to a damper-spring mounting platform 113. In an alternate embodiment illustrated in Fig. 18, the upper end of member 1401 is rotatably connected to damper-spring mounting platform 113 via a rotational connection generally designated 1801. A variety of rotational connections 1801 are contemplated that would allow mounting platform 113 and the attached damper-spring assembly to pivot about member 1401, although in the preferred and illustrated embodiment a bushing within collar 1803 is captured by a pin or bolt fastener (not visible) within mount 1805 of mounting platform 113, thus allowing the damper-spring assembly attached to platform 113 to rotate about axis 1807. In an alternate embodiment, rotational connection 1801 is comprised of a ball joint.

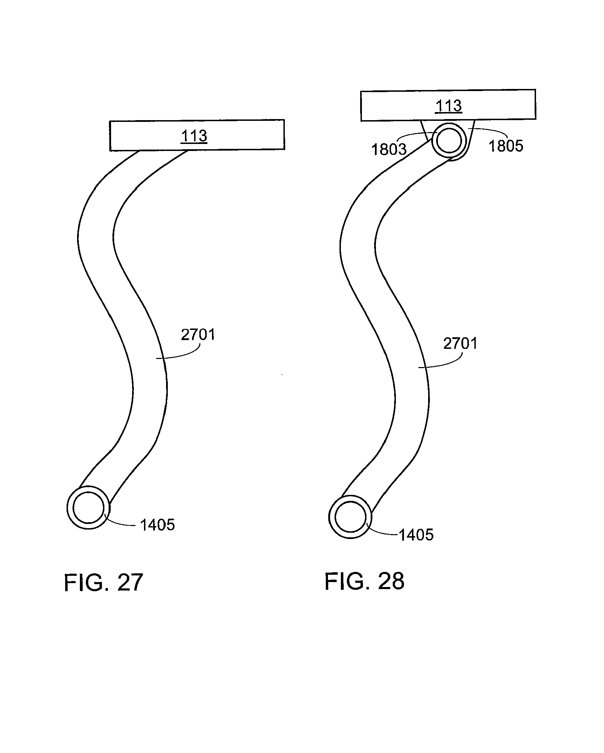

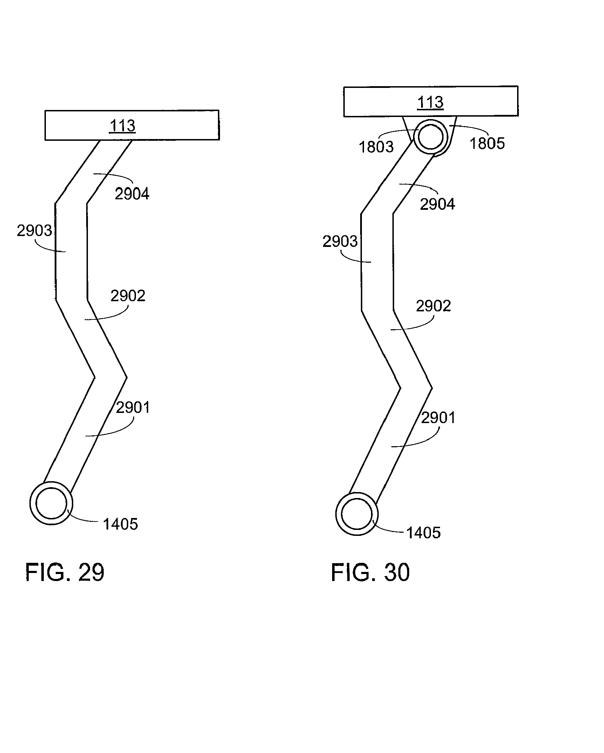

In the embodiment illustrated in Figs. 14, 17 and 18, nonlinearly-shaped member 1401 is comprised of a straight portion 1407 and a curved portion 1409. It should be appreciated, however, that the shaped member may utilize other shapes. For example, Figs. 27 and 28 utilize a continuously curved member 2701, where the support member in Fig. 27 is rigidly coupled to mounting platform 113 while the support member in Fig. 28 is rotatably coupled to mounting platform 113. The support member illustrated in Figs. 29 and 30 utilize a series of straight sections 2901-2903, where the support member in Fig. 29 is rigidly coupled to mounting platform 113 while the support member in Fig. 30 is rotatably coupled to mounting platform 113.

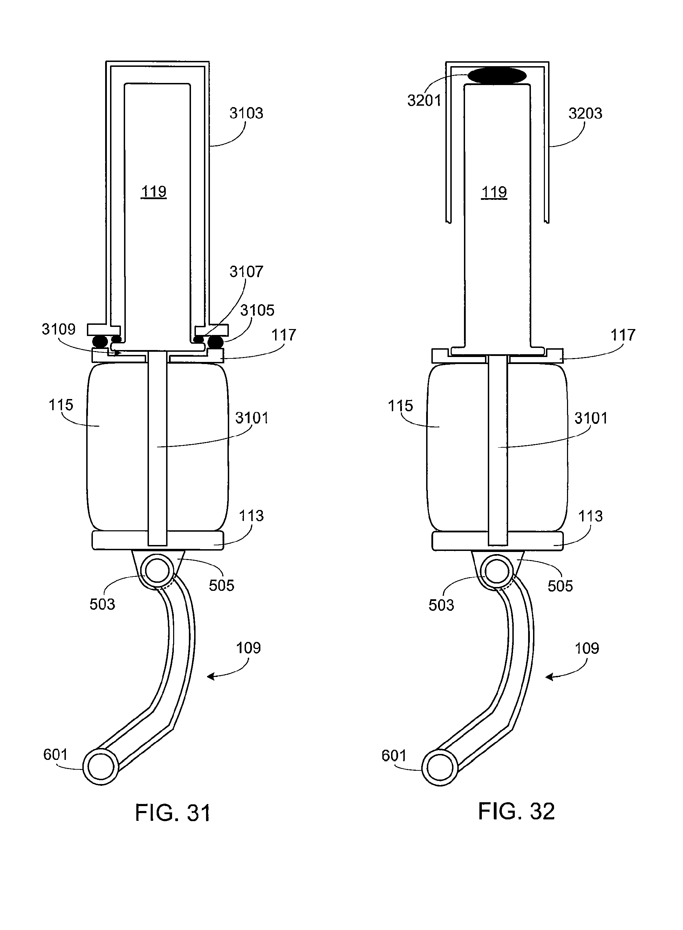

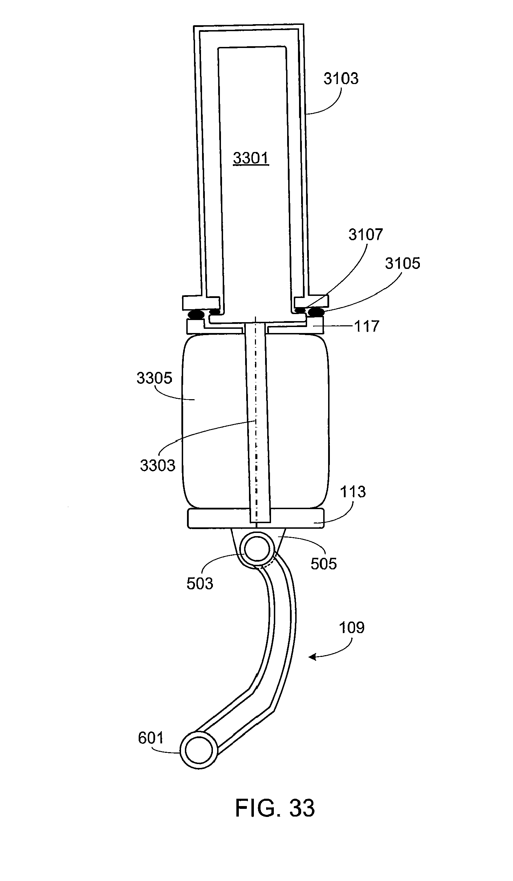

Fig. 31 schematically illustrates the primary components associated with the damper-spring assembly. Although this assembly as well as those illustrated in Figs. 32 and 33 are shown with support member 109 and in a configuration utilizing rotatable coupling 501, this assembly is equally applicable to an assembly in which support member 109 is rigidly coupled to mounting platform 113 (e.g., Fig. 3 embodiment) as well as assemblies in which the damper-spring assembly support member is coupled to a linkage arm (e.g., embodiments illustrated in Figs. 13-18). Spring 115, which may be a coil spring or an air spring, is positioned between mounting platform 113 and spring retaining member 117. Assuming a coaxial damper/spring assembly as preferred, damper rod 3101 passes through the center of the spring and is attached to mounting platform 113. The entire assembly passes through, and is attached to, a portion 3103 of the vehicle structure. Bushings 3105 and 3107, preferably rubber bushings, are interposed between vehicle body portion 3103 and damper-spring assembly 100 as shown. Note that in the preferred embodiment, the damper and the spring are independently mounted to the vehicle structure, thus allowing a gap 3109 to be formed between damper 119 and spring retaining member 117 as shown. By including gap 3109 rather than rigidly coupling the damper to the spring, motion of the damper and spring are decoupled.

While the mounting configuration shown in Fig. 31 is preferred, it will be appreciated that the invention may utilize other mounting configurations. For example and as illustrated in Fig. 32, the damper-spring assembly may be mounted to the vehicle body at the top of the assembly. In such a configuration a bushing 3201, preferably fabricated from rubber, is interposed between the damper 119 and vehicle body 3203.

Although the preferred configuration is optimized for both performance and passenger compartment spacing, it should be appreciated that the nonlinearly shaped damper-spring support member may be used with other suspension configurations. For example, the order of the damper and spring in the damper-spring assembly may be reversed, although such an arrangement will clearly impact the passenger compartment spacing. Similarly, while coaxial mounting of the spring and damper is preferred, in at least one embodiment the axes of the spring and the damper are misaligned and offset from one another. Fig. 33 illustrates one such embodiment, this embodiment based on the configuration shown in Fig. 31. In this exemplary embodiment damper 3301 is misaligned and offset relative to axis 3303 of spring 3305.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A wheel suspension system, comprising:
a wheel support member positioned between an outer tire plane and an inner tire plane, wherein said wheel support member is configured to support a wheel-carrying spindle, and wherein said wheel support member includes a plurality of mounts configured to accept a plurality of rotatably connected linkage arms;
a nonlinearly-shaped damper-spring support member, wherein a first end of said nonlinearly-shaped damper-spring support member is rotatably connected to said wheel support member, and wherein said first end of said nonlinearly-shaped damper-spring support member is located between said outer tire plane and said inner tire plane;
a damper-spring mounting platform, wherein a second end of said nonlinearly-shaped damper-spring support member is coupled to said damper-spring mounting platform, and wherein said nonlinearly-shaped damper-spring support member positions said damper-spring mounting platform above and at least partially overlapping a tire coupled to said wheel-carrying spindle mounted on said wheel support member; and
a damper-spring assembly comprising a damper and a spring, said damper-spring assembly mounted to said damper-spring mounting platform and coupled to a vehicle body structure.

2. A wheel suspension system, comprising:
a wheel support member positioned between an outer tire plane and an inner tire plane, wherein said wheel support member is configured to support a wheel-carrying spindle, and wherein said wheel support member includes a plurality of mounts;
a plurality of rotatably connected linkage arms coupled to said plurality of mounts of said wheel support member;
a nonlinearly-shaped damper-spring support member, wherein a first end of said nonlinearly-shaped damper-spring support member is rotatably connected to a first link of said plurality of rotatably connected linkage arms;
a damper-spring mounting platform, wherein a second end of said nonlinearly-shaped damper-spring support member is coupled to said damper-spring mounting platform, and wherein said nonlinearly-shaped damper-spring support member positions said damper-spring mounting platform above and at least partially overlapping a tire coupled to said wheel-carrying spindle mounted on said wheel support member; and
a damper-spring assembly comprising a damper and a spring, said damper-spring assembly mounted to said damper-spring mounting platform and coupled to a vehicle body structure.

3. The wheel suspension system of anyone of claims 1 and 2, wherein said second end of said nonlinearly-shaped damper-spring support member is rotatably connected to said damper-spring mounting platform.

4. The wheel suspension system of anyone of claims 1 to 3, wherein said damper and said spring are coaxially mounted, wherein said first end of said nonlinearly-shaped damper-spring support member is comprised of a first bushing collar, wherein said second end of said nonlinearly-shaped damper-spring support member is comprised of a second bushing collar, and wherein said first bushing collar and said second bushing collar are each positioned on a damper-spring assembly axis.

5. The wheel suspension system of anyone of claims 1 to 3, wherein said damper and said spring are coaxially mounted.

6. The wheel suspension system of anyone of claims 4 and 5, wherein a load path directed along an axis corresponding to said coaxially mounted damper-spring assembly intersects an underlying road surface at an approximate center of a tire contact patch.

7. The wheel suspension system of anyone of claims 1 to 6, wherein said damper is misaligned and offset relative to said spring.

8. The wheel suspension system of anyone of claims 1 to 7, wherein a first portion of said spring rests on said damper-spring mounting platform, and wherein a damper rod passes through said spring and is coupled to said damper-spring mounting platform.

9. The wheel suspension system of anyone of claims 1 to 8, further comprising a spring retaining member, wherein said spring is captured between said damper-spring mounting platform and said spring retaining member, wherein said spring and said damper are independently mounted to said vehicle body structure, and wherein said damper is spaced apart from said spring retaining member.

10. The wheel suspension system of anyone of claims 1 to 9, wherein said spring is selected from the group consisting of air springs and coil springs.

11. The wheel suspension system of anyone of claims 2 to 10, wherein said first link of said plurality of rotatably connected linkage arms is an upper linkage arm.

12. The wheel suspension system of anyone of claims 2 to 10, wherein said first link of said plurality of rotatably connected linkage arms is a lower linkage arm.
